# EUROPÄISCHE PATENTSCHRIFT

(11) **EP 1 254 425 B1**
(45) Veröffentlichungstag und Bekanntmachung des Hinweises auf die Patenterteilung: **05.04.2006**
(21) Anmeldenummer: 01909548.8
(22) Anmeldetag: 31.01.2001
(51) Int. Cl.: G06K 9/00

(54) **FINGERABDRUCKSENSOR UND BETRIEBSVERFAHREN**
FINGERPRINT SENSOR AND METHOD FOR THE OPERATION THEREOF
CAPTEUR D'EMPREINTES DIGITALES ET PROCEDE PERMETTANT DE FAIRE FONCTIONNER LEDIT CAPTEUR

(30) Priorität: 09.02.2000 DE 10005607
(43) Veröffentlichungstag der Anmeldung: 06.11.2002
(73) Patentinhaber: Infineon Technologies AG, 81669 München (DE)
(72) Erfinder: VON BASSE, Paul-Werner, 82515 Wolfratshausen (DE)
(74) Vertreter: Epping - Hermann - Fischer
(86) Internationale Anmeldenummer: PCT/DE2001/000374
(87) Internationale Veröffentlichungsnummer: WO 2001/059692

(56) Entgegenhaltungen:
- WO-A-01/10296
- US-A- 5 635 723

## Beschreibung

Die vorliegende Erfindung betrifft einen Fingerabdrucksensor bzw. ein Betriebsverfahren für einen solchen Sensor, mit dem der Stromverbrauch minimiert werden kann.

Fingerabdrucksensoren sind Vorrichtungen, mit denen auf elektronischem Wege mittels eines geeigneten Rasters einzelner Sensorelemente ein Bild eines Fingerabdruckes oder der wesentlichen Komponenten des Fingerabdruckes (Minutien) aufgenommen werden können. Derartige Fingerabdrucksensoren können z.B. zur Bestimmung der Identität einer Person verwendet werden oder zur Kontrolle einer Zugangsberechtigung zu einer elektronischen Schaltung oder einer mittels einer Schaltung gesteuerten Apparatur. Werden solche Fingerabdrucksensoren eingesetzt, um die Zugangsberechtigung zu elektrischen Geräten, die netzunabhängig betrieben werden, zu überprüfen, dann stellt sich das Problem eines möglicherweise zu hohen Stromverbrauches, wenn der Fingerabdrucksensor ständig eingeschaltet bleibt. Der Fingerabdrucksensor wird daher zweckmäßigerweise zusammen mit dem Ein- und Ausschalten des Gerätes ebenfalls abgeschaltet. Während das Gerät benutzt wird, bleibt der Fingerabdrucksensor eingeschaltet und verbraucht möglicherweise zu viel Strom. Um das zu vermeiden, muss der Fingerabdrucksensor gegebenenfalls getrennt abschaltbar sein. Um sicherzustellen, dass der Anwender den Fingerabdrucksensor nach dem Überprüfen der Zugangsberechtigung abstellt, müssen gegebenfalls noch Warnanzeigen oder dergleichen an dem Gerät vorhanden sein. Der Aufbau des Gerätes wird dadurch unnötig kompliziert und die Bedienung gegebenenfalls unhandlich.

In der US 5,635,723 ist ein Fingerabdrucksensor mit einer Schaltvorrichtung beschrieben, die an den Adressleitungen der Bildpunkte eine Kapazitätsänderung beim Auflegen eines Fingers erfasst und den Sensor beim Auflegen eines Fingers auf die Auflagefläche und beim Entfernen des Fingers ein- und abschaltet. Außerdem sind Fingerabdrucksensoren beschrieben, bei denen eine ähnliche Schaltfunktion durch einen Drucksensor, einen Fotodetektor oder einen durch Leiterbahnen in der Auflagefläche gebildeten Kurzschlussschalter ausgelöst wird.

Aufgabe der vorliegenden Erfindung ist es, einen Fingerabdrucksensor anzugeben, der bei stromsparendem Betrieb auch gegen unbefugte Benutzung abgesichert ist.

Diese Aufgabe wird mit dem Fingerabdrucksensor mit den Merkmalen des Anspruches 1 bzw. mit dem Betriebsverfahren mit den Merkmalen des Anspruches 3 gelöst. Ausgestaltungen ergeben sich aus dem abhängigen Anspruch.

Bei dem erfindungsgemäßen Fingerabdrucksensor bzw. dem erfindungsgemäßen Betriebsverfahren bleibt der Fingerabdrucksensor in einem Stand-by-Modus oder Sleep-Modus, solange kein Finger auf dem Sensor aufgelegt ist. In diesem Betriebszustand ist der Stromverbrauch sehr gering, da nur festgestellt wird (gegebenenfalls mittels eines weiteren Sensors), ob eine Fingerbeere dem Sensor angenähert oder auf eine dafür vorgesehene Auflagefläche aufgelegt wird. Ist das der Fall, dann wird über ein entsprechendes Signal bewirkt, dass der Fingerabdrucksensor in (volle) Funktion geschaltet wird und in diesem Betriebszustand Fingerabdruckbilder in dem gewünschten Umfang liefert. Auf diese Weise wird erreicht, dass nur während der Nutzzeit des Fingerabdrucksensors, das heißt, während der Zeit, in der eine Fingerbeere zur Erfassung eines Fingerabdruckes mit dem Sensor verbunden ist, der Betriebszustand des Fingerabdrucksensors die volle elektrische Leistung beansprucht. Während der übrigen Zeit ist nur die eingeschränkte Sensorfunktion bzw. ein weiterer Sensor eingeschaltet, so dass bei Bedarf ein Einschaltsignal an den Fingerabdrucksensor gegeben wird.

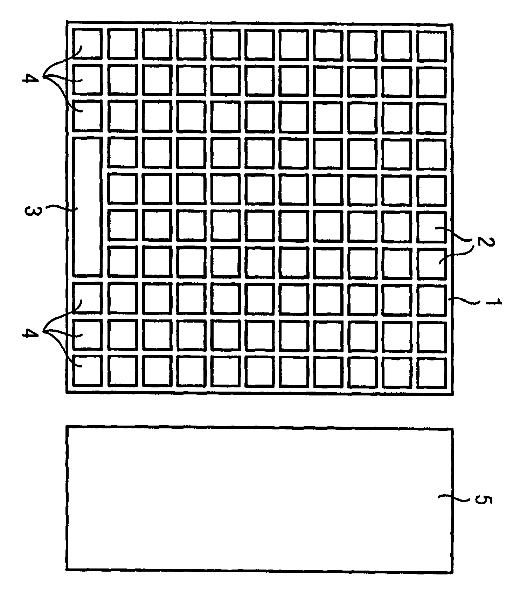

Im folgenden werden Beispiele des Fingerabdrucksensors und des Betriebsverfahrens anhand der beigefügten Figur näher erläutert. In dieser Figur sind dargestellt eine Auflagefläche 1 für eine Fingerbeere, in der eine Vielzahl von einzelnen Sensorelementen 2 in einer rasterförmigen Anordnung, vorzugsweise nach Art einer Matrix, angeordnet sind. Ein weiterer Sensor 3 ist in diesem Beispiel vorhanden, der für die Detektion des Annäherns oder Auflegens einer Fingerbeere vorgesehen ist. Dieser weitere Sensor 3 ist vorzugsweise an derjenigen Seite der Auflagefläche 1 angebracht, die in der Richtung liegt, von der her ein aufzulegender Finger sich üblicherweise auf den Fingerabdrucksensor zu bewegt. Das ist in der Regel der untere Rand des von dem Sensor erfassten Ausschnittes der Fingerbeere. Die in der Reihe des weiteren Sensors 3 eingezeichneten Sensorelemente 4 können auch weggelassen sein, wenn der eigentliche Fingerabdruck im Bereich oberhalb des weiteren Sensors 3 erfasst werden soll. Schematisch ist noch eine Ansteuer- und Auswerteschaltung 5 als Schaltungsblock neben der Auflagefläche 1 eingezeichnet. Diese elektronische Schaltung kann in dem Fingerabdrucksensor beliebig angeordnet sein in einer Art und Weise, die an sich bekannt ist. Insbesondere können Schaltungskomponenten auch im Bereich der einzelnen Sensorelemente 2 vorhanden sein.

Zum Einschalten des Fingerabdrucksensors kann die Detektion verschiedener physikalischer Größen verwendet werden, insbesondere des Druckes, der Temperatur, der Wärmestrahlung (Infrarotstrahlung), des elektrischen Widerstandes der Haut oder einer Kapazitätsänderung bei Annäherung der Fingerbeere. Insbesondere sind die nachfolgend beschriebenen Möglichkeiten realisierbar, bei denen in der Regel ein weiterer Sensor zur Erfassung der betreffenden physikalischen Größe erforderlich sein wird.

Als Drucksensor können z.B. Piezo-Kristalle eingesetzt werden. Diese Kristalle sind für den vorgesehenen Verwendungszweck ausreichend klein und sehr empfindlich auch bei niedrigen Frequenzen, so dass sie große Signale liefern. Aus diesem Grund können sie auch zur Pulsmessung über den periodisch variierenden Blutdruck an der Oberfläche der Fingerbeere verwendet werden. Die Messergebnisse dieser Sensoren sind damit auch ein Indikator dafür, dass eine lebende Fingerbeere auf den Sensor aufgelegt wurde. Derartige Drucksensoren können daher auch verwendet werden, um das erfindungsgemäße Verfahren, mit dem der Fingerabdrucksensor nur bei Bedarf eingeschaltet wird, mit einer Lebenderkennung zu kombinieren.

Als weitere Möglichkeit kommen Temperatursensoren in Betracht, wobei hier am günstigsten der Einsatz von Thermowiderständen ist, wie sie von einfachen Digital-Temperatur-Messgeräten an sich bekannt sind. Der Wert des elektrischen Widerstandes dieser Sensoren ändert sich bei geringen Temperaturschwankungen in einem großen Bereich. Als Indikator für eine Berührung des Sensors mit einer Fingerbeere dient die dadurch verursachte Temperaturänderung, die mit dem Temperatursensor erfasst wird. Die Messung kann auch als Lebenderkennung verwendet werden.

Geeignet als Sensoren sind außerdem Infrarot-Fototransistoren oder -dioden, die auf die von dem Finger ausgehende Wärmestrahlung reagieren. Eine Änderung der Detektion der Wärmestrahlung in diesem Infrarotsensor kann sowohl als Signal zum Einschalten des Fingerabdrucksensors als auch als Signal der Lebenderkennung verwendet werden. Wird die Haut des Fingers zusätzlich durch eine rot oder infrarot strahlende Diode durchleuchtet (diffuse Einstrahlung), so kann mittels der Absorption dieser Strahlung durch das pulsierend fließende Blut die Pulsfrequenz detektiert werden. Diese Messung vollzieht sich über einen typischen Zeitraum von etwa 1 bis 2 Sekunden und kann ebenfalls zur Lebenderkennung verwendet werden. Gleichzeitig besteht hier noch die Möglichkeit, als Folie angefertigte Fälschungen einer Fingerbeere zu erkennen.

Ebenso wie beim Lügendetektor kann auch bei der erfindungsgemäßen Ausgestaltung des Fingerabdrucksensors der elektrische Widerstand der Hautoberfläche gemessen werden. Diese Messung ist ein besonders bevorzugtes Ausführungsbeispiel, da die Messung relativ schnell erfolgt, so dass sie sehr gut als Indikator für eine Berührung des Sensors verwendet werden kann. Auf der berührten Oberfläche der Haut wirkt der Fingerabdrucksensor als Sperre oder Barriere für aus der Haut austretenden Wasserdampf. Daher beginnt die berührende Hautoberfläche in relativ kurzer Zeit zu schwitzen, das heißt, sie wird feucht, so dass der elektrische Widerstand der Hautoberfläche allmählich absinkt. Diese Änderung in dem gemessenen Widerstand kann als Indikator für eine Lebenderkennung genommen werden. Eine schnelle Änderung des Hautwiderstandes wird durch psychische Stimulation erreicht, z.B. indem der Proband eine akustische oder optische Mitteilung erhält, die eine gewisse Stress-Reaktion nach sich zieht. Eine solche Stress-Reaktion kann z.B. durch eine optische Anzeige oder eine akustische Meldung über einen Lautsprecher hervorgerufen werden, mit der der Proband auf einen Fehler hingewiesen wird, in der Art von: "Sie wurden nicht erkannt! Legen Sie den Finger noch einmal auf!". Ebenso ist es möglich, ein einfaches optisches Signal (z.B. ein Blinklicht) oder akustisches Signal (z.B. einen Warnton) auszugeben. Die Stress-Reaktion ist darauf zurückzuführen, dass der Proband befürchtet, die technische Vorrichtung nicht in der vorgesehenen und von ihm gewünschten Weise in Gang setzen zu können. Die hieraus folgende Änderung des Hautwiderstandes stellt eine aktive Reaktion dar und sollte daher in erster Linie zur Lebenderkennung verwendet werden. Die Funktion des Fingerabdrucksensors sollte bereits zu Beginn des Auflegens der Fingerbeere auf den Sensor eingeschaltet werden.

Die Messung des elektrischen Widerstandes erfolgt vorzugsweise über zwei Leiterflächen, mit denen der Finger in Berührung kommt. Bei Ausführungsformen des Fingerabdrucksensors, bei denen zur Verminderung des Verschleißes eine Passivierungsschicht oder Schutzschicht über den Sensorelementen angebracht ist, die aus einem elektrisch isolierenden Material besteht, sind daher zur Messung des elektrischen Widerstandes der Hautoberfläche eigens vorgesehene Kontaktflächen erforderlich, die mit der Haut in Berührung kommen. Ohne eine derartige direkte Kontaktierung der Haut kommt man aus, wenn statt dessen ein Kapazitätsmesser als Sensor verwendet wird.

Bei der Messung einer Kapazitätsänderung wird eine kleine isolierte Metallfläche in der Nähe der Auflagefläche für die Fingerbeere mit einem niederfrequenten Signal aus einer hochohmigen Quelle beaufschlagt. Bei Berührung des Sensors wird die Metallfläche durch den aufgelegten Finger kurzgeschlossen, das heißt, an der Metallfläche verschwindet das Signal. Diese Änderung der Signalgröße kann als Berührungsindikator verwendet werden. Die Messung erfolgt mittels sehr geringer elektrischer Leistung und extrem schnell. Die Kapazitätsmessung stellt daher ein bevorzugtes Ausführungsbeispiel da, insbesondere wenn der Fingerabdrucksensor selbst auf einem kapazitiven Messprinzip beruht, weil dann eine für die Sensorelemente vorgesehene strukturierte Metallfläche auch für die Kapazitätsmessung, die den Einschaltvorgang steuert, verwendet werden kann.

Unabhängig von der Ausgestaltung des Fingerabdrucksensors mit einem der genannten Sensoren besteht das erfindungsgemäße Verfahren im Grundsatz darin, festzustellen, ob eine lebende Fingerbeere dem Fingerabdrucksensor angenähert oder auf eine dafür vorgesehene Auflagefläche des Fingerabdrucksensors aufgelegt wird und erst dann den Fingerabdrucksensor in einen Betriebszustand umzuschalten, in dem er voll funktionsfähig ist. Wird der Finger entfernt, wird der Fingerabdrucksensor abgeschaltet, und die gesamte Anordnung, in der das erfindungsgemäße Verfahren eingesetzt wird, befindet sich wieder in einem Stand-by-Modus oder Sleep-Modus, in dem der Stromverbrauch sehr gering ist.

## Patentansprüche

1. Fingerabdrucksensor mit einer rasterförmigen Anordnung von Sensorelementen (2), bei dem
eine Schaltvorrichtung (5) vorhanden ist, die den Sensor abwechselnd in einen Betriebszustand, in dem er eingeschaltet ist, und in einen anderen Betriebszustand, in dem er abgeschaltet ist, versetzt,
eine Sensorfunktion oder ein weiterer Sensor (3) vorhanden ist, mit dem eine Änderung einer physikalischen Größe festgestellt werden kann, die sich bei einem Auflegen einer Fingerbeere auf den Fingerabdrucksensor ändert, und
die Schaltvorrichtung (5) so eingerichtet ist, dass durch ein Sensorsignal jeweils bei einem Auflegen oder Annähern einer Fingerbeere auf bzw. an eine dafür vorgesehene Auflagefläche (1) des Fingerabdrucksensors und bei einem Entfernen der Fingerbeere von dieser Auflagefläche ein Schaltvorgang ausgelöst wird, mit dem der Betriebszustand des Fingerabdrucksensors geändert wird,
**dadurch gekennzeichnet, dass**
mit einem oder dem weiteren Sensor (3) aus der Gruppe von Drucksensor, Temperatursensor, Infrarotsensor, elektrischem Widerstandssensor und Kapazitätsmesser eine Lebenderkennung eines aufgelegten Fingers erfolgt.

2. Fingerabdrucksensor nach Anspruch 1, bei dem der weitere Sensor (3) für die Detektion des Annäherns oder Auflegens einer Fingerbeere vorgesehen ist.

3. Verfahren zum Betrieb eines Fingerabdrucksensors, bei dem laufend
a) festgestellt wird, ob eine Fingerbeere auf den Fingerabdrucksensor aufgelegt oder dem Fingerabdrucksensor angenähert wird,
b) im Fall einer aufgelegten oder angenäherten Fingerbeere der Fingerabdrucksensor in Funktion versetzt wird, wobei eine Lebenderkennung zur Überprüfung, ob eine lebende Fingerbeere aufgelegt oder angenähert wird, erfolgt und ein jeweiliges Ergebnis dieser Lebenderkennung als Kriterium zum Einschalten der Funktion des Fingerabdrucksensors verwendet wird
c) ansonsten der Fingerabdrucksensor abgeschaltet bleibt sowie
d) im Fall der Entfernung der Fingerbeere des Fingerabdrucksensor abgeschaltet wird.

## Claims

1. Fingerprint sensor having a grid-type arrangement of sensor elements (2), in which
a switching device (5) is present, which alternately puts the sensor into an operating state in which it is switched on, and into another operating state, in which it is switched off,
a sensor function or a further sensor (3) is present by means of which it is possible to ascertain a change in a physical quantity which changes when a fingertip is placed onto the fingerprint sensor, and
the switching device (5) is set up in such a way that a switching process by means of which the operating state of the fingerprint sensor is changed is initiated by a sensor signal in each case when a fingertip is placed onto or approaches a bearing area (1) provided for it on the fingerprint sensor, and when the fingertip is removed from the said bearing area,
**characterized in that**
an alive recognition of an emplaced finger is effected by means of a or the further sensor (3) from the group of pressure sensor, temperature sensor, infrared sensor, electrical resistance sensor and capacitance meter.

2. Fingerprint sensor according to Claim 1, in which the further sensor (3) is provided for detecting the approach or emplacement of a fingertip.

3. Method for operating a fingerprint sensor, in which continuously
a) it is ascertained whether a fingertip is placed onto the fingerprint sensor or approaches the fingerprint sensor,
b) in the case of an emplaced fingertip or fingertip that has approached, the fingerprint sensor is put into operation, an alive recognition for checking whether a living fingertip is emplaced or approaches being effected and a respective result of this alive recognition being used as a criterion for switching on the function of the fingerprint sensor,
c) otherwise the fingerprint sensor remains switched off, and
d) the fingerprint sensor is switched off in the case of the fingertip being removed.

## Revendications

1. Capteur d'empreintes digitales avec une disposition d'éléments capteurs (2) en trames, tel que
il est prévu un dispositif de commutation (5) qui met le capteur en alternance dans un état de fonctionnement dans lequel il est en service et dans un autre état de fonctionnement dans lequel il est hors service,
il est prévu une fonction de capteur ou un autre capteur (3) avec lequel peut être constatée une variation d'une grandeur physique qui varie lorsque la pulpe d'un doigt est posée sur le capteur d'empreintes digitales, et
le dispositif de commutation (5) est conçu de telle sorte qu'une opération de commutation, avec laquelle l'état de fonctionnement du capteur d'empreintes digitales est changé, est déclenchée par un signal de capteur à chaque fois lorsque la pulpe d'un doigt est posée sur ou approchée d'une surface d'appui (1), prévue à cet effet, du capteur d'empreintes digitales et lorsque la pulpe du doigt est éloignée de cette surface d'appui,
**caractérisé par le fait que**,
avec un capteur ou avec l'autre capteur (3), choisi dans l'ensemble des capteurs de pression, capteurs de température, capteurs d'infrarouge, capteurs à résistance électrique et dispositifs de mesure de capacité, il s'effectue une acquisition de preuve de vie d'un doigt posé.

2. Capteur d'empreintes digitales selon la revendication 1, tel que l'autre capteur (3) est prévu pour la détection de l'approche ou de la pose de la pulpe d'un doigt.

3. Procédé pour faire fonctionner un capteur d'empreintes digitales, dans lequel, en permanence,
a) on vérifie si la pulpe d'un doigt est posée sur le capteur d'empreintes digitales ou est approchée du capteur d'empreintes digitales,
b) si la pulpe d'un doigt est posée ou approchée, on met en service le capteur d'empreintes digitales, une acquisition de preuve de vie pour vérifier si la pulpe de doigt posée ou approchée est vivante étant effectuée et un résultat respectif de cette acquisition de preuve de vie étant utilisé comme critère pour mettre en service la fonction du capteur d'empreintes digitales,
c) sinon, le capteur d'empreintes digitales reste hors service, et
d) si la pulpe de doigt est éloignée, le capteur d'empreintes digitales est mis hors service.
